# EUROPÄISCHE PATENTSCHRIFT

(11) **EP 3 143 030 B1**
(45) Veröffentlichungstag und Bekanntmachung des Hinweises auf die Patenterteilung: **17.07.2019**
(21) Anmeldenummer: 15719762.5
(22) Anmeldetag: 08.05.2015
(51) Int. Cl.: C07F 9/30, C07F 9/32

(54) **VERFAHREN ZUR HERSTELLUNG VON PHOSPHORHALTIGEN CYANHYDRINEN**
METHOD FOR THE PREPARATION OF CYANOHYDRINS CONTAINING PHOSPHORUS
PROCÉDÉ DE FABRICATION DE CYANHYDRINES PHOSPHORÉES

(30) Priorität: 13.05.2014 EP 14168134
(43) Veröffentlichungstag der Anmeldung: 22.03.2017
(73) Patentinhaber: BASF SE, 67056 Ludwigshafen (DE)
(72) Erfinder: RESSEL, Hans-Joachim, 65795 Hattersheim (DE); TELLMANN, Kilian, 50823 Köln (DE); FORD, Mark James, 65207 Wiesbaden-Breckenheim (DE); LITTMANN, Martin, 51375 Leverkusen (DE); MÜHLTHAU, Friedrich August, 65779 Kelkheim-Fischbach (DE); SCHLEGEL, Günter, 51381 Leverkusen (DE)
(74) Vertreter: BASF IP Association
(86) Internationale Anmeldenummer: PCT/EP2015/060211
(87) Internationale Veröffentlichungsnummer: WO 2015/173146

(56) Entgegenhaltungen:
- EP-A1- 0 011 245
- EP-A1- 0 029 168
- EP-A1- 0 546 566
- EP-A2- 0 127 877
- DE-A1- 2 302 523
- DE-A1- 3 047 024
- PIETTRE S R ED - BARTON DEREK: "Simple and efficient synthesis of 2,2-disubstituted-1,1-difluorophosphonates and phosphonothioates", TETRAHEDRON LETTERS, PERGAMON, GB, Bd. 37, Nr. 13, 25. März 1996 (1996-03-25) , Seiten 2233-2236, XP004841992, ISSN: 0040-4039, DOI: 10.1016/0040-4039(96)00239-0

## Beschreibung

Die vorliegende Erfindung betrifft primär ein Verfahren zur Herstellung bestimmter phosphorhaltiger Cyanhydrine der nachfolgend definierten Formel (I), sowie bestimmte phosphorhaltige Cyanhydrine per se und deren Verwendung zur Herstellung von Glufosinat bzw. von Glufosinat-Salzen. Ferner betrifft die vorliegende Erfindung bestimmte Mischungen, die zur Herstellung der phosphorhaltigen Cyanhydrine der nachfolgend definierten Formel (I) besonders geeignet sind.

Phosphorhaltige Cyanhydrine sind wertvolle Zwischenprodukte auf verschiedenen Sachgebieten, insbesondere zur Herstellung biologisch aktiver Substanzen, die im pharmazeutischen bzw. agrochemischen Bereich eingesetzt werden können.

US 4,168,963 beschreibt diverse phosphorhaltige herbizid wirksame Verbindungen, von denen insbesondere Phosphinothricin (2-Amino-4-[hydroxy(methyl)phosphinoyl]-butansäure; Kurzbezeichnung ("common name"): Glufosinate, nachfolgend Glufosinat) bzw. dessen Salze kommerzielle Bedeutung im Bereich der Agrochemie (Agrarchemie) erlangt haben.

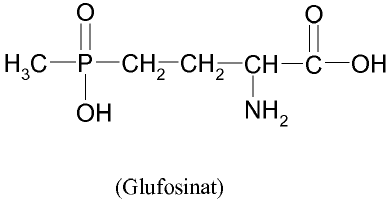

Methoden zur Herstellung von Zwischenprodukten zur Synthese solcher phosphorhaltiger herbizid wirksamer Verbindungen, insbesondere von Glufosinat, sind beispielsweise in US 4,521,348, DE 3047024, US 4,599,207 und US 6,359,162B1 beschrieben.

CN 102372739A beschreibt ein Verfahren zur Herstellung von Glufosinat durch Umsetzung von (3-Cyano-3-hydroxypropyl)-methyl-phosphinsäure mit Kohlendioxid, Ammoniak und Wasser.

CN 102399240A offenbart Verfahren zur Herstellung von Glufosinat und Glufosinat-Analoga, wobei dort von PCl₃, CH₃MgCl und bestimmten Phosphorigsäuretrialkylestern ausgegangen wird. Die daraus hergestellten Methylphosphonsäuredialkylester und Methylphosphinsäurealkylester werden dort anschließend durch Michael-Addition und weitere Reaktionsschritte zu Glufosinat und Glufosinat-Analoga umgesetzt.

CN 101830926A betrifft die Herstellung von Dialkylmetallphosphinaten und deren Verwendung als Flammschutzmittel. In dem beschriebenen Verfahren werden Alkylphosphinate mit endständigen Olefinen umgesetzt, wobei unter anderem Methanphosphinsäuremonobutylester mit Cyclohexen umgesetzt wurde.

Die Verfahren aus dem Stand der Technik zur Herstellung phosphorhaltiger Cyanhydrine weisen Nachteile auf, beispielsweise eine zu geringe Ausbeute an phosphorhaltigen Cyanhydrinen, einen zu großen Anteil an Koppel- oder Nebenprodukten, einen zu hohen Aufwand bei der Reinigung bzw. Isolierung der phosphorhaltigen Cyanhydrine und/oder verfahrens- bzw. anlagentechnisch zu schwierige bzw. harsche Reaktionsbedingungen.

Aufgabe der vorliegenden Erfindung war es daher ein Verfahren zur Herstellung phosphorhaltiger Cyanhydrine zu finden, welches die phosphorhaltigen Cyanhydrine in sehr guter Ausbeute liefert.

Das Verfahren sollte vorzugsweise gleichzeitig ein, mehrere oder sämtliche der folgenden Aspekte (i) bis (iv) erfüllen:
(i) möglichst einfache verfahrens- bzw. anlagentechnische Durchführbarkeit;
(ii) milde Reaktionsbedingungen:
(iii) möglichst geringer Anteil an (schwer abtrennbaren) Nebenprodukten;
(iv) möglichst einfache Reinigung bzw. Isolierung der phosphorhaltigen Cyanhydrine.

Das nachfolgend beschriebene erfindungsgemäße Verfahren erfüllt diese Aufgabe.

Gegenstand der vorliegenden Erfindung ist ein Verfahren zur Herstellung phosphorhaltiger Cyanhydrine der Formel (I) 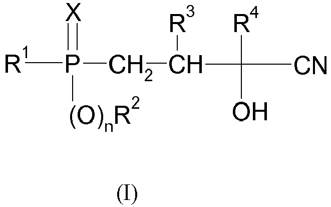 dadurch gekennzeichnet, dass eine Verbindung der Formel (II) 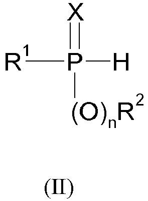 mit einem Cyanhydrin der Formel (III) 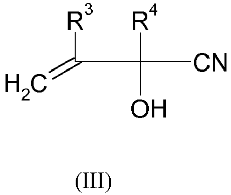 bei einer Temperatur im Bereich von 50 bis 105°C umgesetzt wird, vorzugsweise bei einer Temperatur im Bereich von 60 bis 95°C, bevorzugt bei einer Temperatur im Bereich von 65 bis 90°C, wobei jeweils gilt:
- R¹: bedeutet (C₁-C₁₂)-Alkyl, (C₁-C₁₂)-Haloalkyl, (C₆-C₁₀)-Aryl, (C₆-C₁₀)-Haloaryl, (C₇-C₁₀)-Aralkyl, (C₇-C₁₀)-Haloaralkyl, (C₄-C₁₀)-Cycloalkyl oder (C₄-C₁₀)-Halocycloalkyl,
- R²: bedeutet (C₁-C₁₂)-Alkyl, (C₁-C₁₂)-Haloalkyl, (C₆-C₁₀)-Aryl, (C₆-C₁₀)-Haloaryl, (C₇-C₁₀)-Aralkyl, (C₇-C₁₀)-Haloaralkyl, (C₄-C₁₀)-Cycloalkyl oder (C₄-C₁₀)-Halocycloalkyl,
- R³ und R⁴: bedeuten jeweils unabhängig voneinander Wasserstoff, (C₁-C₄)-Alkyl, Phenyl oder Benzyl,
- X: bedeutet Sauerstoff oder Schwefel, und
- n: ist 0 oder 1, und
die Umsetzung in Gegenwart eines oder mehrerer Radikalbildner der Formel (IV) erfolgt: 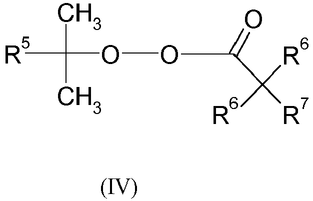 wobei
- R⁵: Methyl, Ethyl, 2,2-Dimethylpropyl oder Phenyl bedeutet,
- R⁶: unabhängig voneinander (C₁-C₁₀)-Alkyl bedeutet, vorzugsweise (C₁-C₆)-Alkyl, bevorzugt (C₁-C₄)-Alkyl,
und
- R⁷: Wasserstoff oder (C₁-C₁₀)-Alkyl bedeutet, vorzugsweise Wasserstoff oder (C₁-C₆)-Alkyl, bevorzugt Wasserstoff oder (C₁-C₄)-Alkyl.

DE 3047024 beschreibt grundsätzlich die Umsetzung von Verbindungen der Formel (II) mit Verbindungen der Formel (III) unter Bildung von Verbindungen der Formel (I), jedoch in unbefriedigender Ausbeute, welche insbesondere im technischen bzw. großtechnischen Maßstab unzureichend ist. Beispielhaft beschreibt DE 3047024 die Umsetzung von Methanphosphonigsäuremonoisobutylester mit Acroleincyanhydrin unter Zusatz einer katalytischen Menge eines Radikalbildners "Peroctoat" bei einer Temperatur von 120-130°C. Die Ausbeute nach Destillation lag dort bei 79% der Theorie.

Die Cyanhydrine der Formel (III) weisen eine signifikant höhere Reaktivität auf als die entsprechenden Verbindungen, die anstelle der freien Hydroxygruppe eine O-Acetylgruppe aufweisen, wie sie beispielsweise in US 4,521,348 oder US 4,599,207 eingesetzt wurden.

Mit dem erfindungsgemäßen Verfahren, bei dem die Reaktionstemperatur in dem erfindungsgemäß definierten Temperaturbereich gehalten wird, und bei dem vorzugsweise Radikalbildner der nachfolgend definierten Formel (IV) verwendet werden, werden die phosphorhaltigen Cyanhydrine der Formel (I) in deutlich besserer Ausbeute und regelmäßig in höherer Reinheit erhalten.

Die in dem erfindungsgemäßen Verfahren eingesetzten Verbindungen der Formel (III) weisen keine O-Acetylgruppe auf, und es entstehen im weiteren nachfolgend beschriebenen erfindungsgemäßen Verfahren zur Herstellung von Glufosinat, anders als bei den in US 4,521,348 oder US 4,599,207 beschriebenen Verfahren, keine Essigsäure und Essigsäurederivate als Begleitkomponenten oder Koppelprodukte.

Ferner hat sich gezeigt, dass in dem erfindungsgemäßen Verfahren zur Herstellung der Verbindung der Formel (I) (sowie der nachfolgend definierten Verbindung der Formel (Ia) bzw. (Ib)) die Qualität der nicht umgesetzten und wiedergewonnenen, d.h. recycelten, Menge der Verbindung der Formel (II) (bzw. der nachfolgend definierten Formel (IIa) oder (IIb)) nach erfolgter Reaktion besser ist als in den literaturbekannten Verfahren, in denen anstelle der Cyanhydrine der Formel (III) die entsprechenden O-acetylierten Cyanhydrine eingesetzt werden.

Wiedergewonnene (recycelte) Mengen der Verbindung der Formel (II) aus den literaturbekannten Verfahren, in denen anstelle der Cyanhydrine der Formel (III) die entsprechenden O-acetylierten Cyanhydrine eingesetzt werden, enthalten üblicherweise merkliche Anteile (etwa 5 Gew.-%) an Essigsäure, die nicht ohne erheblichen destillativen Aufwand abtrennbar sind. Restmengen an Essigsäure hemmen bzw. verlangsamen jedoch die Radikalreaktion, so dass eine Rückführung und ein erneutes Einsetzen der wiedergewonnenen (recycelten) Mengen der Verbindung der Formel (II) in die Radikalreaktion nachteilig ist.

Insgesamt entstehen in den erfindungsgemäßen Verfahren, auch in dem weiteren nachfolgend beschriebenen erfindungsgemäßen Verfahren zur Herstellung von Glufosinat, weniger unerwünschte Nebenkomponenten, so dass die erfindungsgemäßen Verfahren effizienter und energiesparender sind.

Die jeweiligen Alkylreste der Reste R¹, R², R³ und R⁴ können im Kohlenstoffgerüst jeweils geradkettig oder verzweigtkettig (verzweigt) sein.

Der Ausdruck "(C₁-C₄)-Alkyl" ist dabei die Kurzschreibweise für einen Alkylrest mit 1 bis 4 Kohlenstoffatomen, d.h. umfasst die Reste Methyl, Ethyl, 1-Propyl, 2-Propyl, 1-Butyl, 2-Butyl, 2-Methylpropyl oder tert-Butyl. Allgemeine Alkylreste mit einem größeren angegebenen Bereich von C-Atomen, z.B. "(C₁-C₆)-Alkyl" umfassen entsprechend auch gradkettige oder verzweigte Alkylreste mit einer größeren Zahl von C-Atomen, d.h. gemäß Beispiel auch die Alkylreste mit 5 und 6 C-Atomen.

"Halogen" bezieht vorzugsweise auf die Gruppe bestehend aus Fluor, Chlor, Brom und Iod. Haloalkyl, Haloaryl, Haloaralkyl und Halocycloalkyl bedeuten durch gleiche oder verschiedene Halogenatome, vorzugsweise aus der Gruppe Fluor, Chlor und Brom, insbesondere aus der Gruppe Fluor und Chlor, teilweise oder vollständig substituiertes Alkyl, Aryl, Aralkyl bzw. Cycloalkyl. So umfasst Haloalkyl z.B. Monohaloalkyl (= Monohalogenalkyl), Dihaloalkyl (= Dihalogenalkyl), Trihaloalkyl (= Trihalogenalkyl), oder auch Perhaloalkyl, wie beispielsweise CF₃, CHF₂, CH₂F, CF₃CF₂, CH₂FCHCl, CCl₃, CHCl₂, CH₂CH₂Cl. Entsprechendes gilt für die anderen durch Halogen substituierte Reste.

Als Verbindungen der Formel (II) sind unter anderem die folgenden geeignet und bevorzugt: Methanphosphonigsäuremono(C₁-C₆)-Alkylester, Methanphosphonigsäuremono-Dodecylester, Methanphosphonigsäuremono-Phenylester; Ethanphosphonigsäuremono(C₁-C₆)-Alkylester, Ethanphosphonigsäuremono-Dodecylester, Ethanphosphonigsäuremono-Phenylester; Propanphosphonigsäuremono(C₁-C₆)-Alkylester, Propanphosphonigsäuremono-Dodecylester, Propanphosphonigsäuremono-Phenylester; Butanphosphonigsäuremono(C₁-C₆)-Alkylester, Butanphosphonigsäuremono-Dodecylester, Butanphosphonigsäuremono-Phenylester; Phenylphosphonigsäuremono(C₁-C₆)-Alkylester, Phenylphosphonigsäuremono-Dodecylester, Phenylphosphonigsäuremono-Phenylester; Benzylphosphonigsäuremono(C₁-C₆)-Alkylester, Benzylphosphonigsäuremono-Dodecylester, Benzylphosphonigsäuremono-Phenylester; Methylthiophosphonigsäuremono(C₁-C₆)-Alkylester, Methylthiophosphonigsäuremono-Dodecylester Methylthiophosphonigsäuremono-Phenylester; Dimethylphosphinoxid, Diethylphosphinoxid, Dipropylphosphinoxid, Dibutylphosphinoxid, Diphenylphosphinoxid, Methyl-Phenylphosphinoxid, Dibenzylphosphinoxid, Dimethylphosphinsulfid, und Diphenylphosphinsulfid.

Die Herstellung der Verbindungen der Formel (II) ist dem Fachmann bekannt und kann nach literaturbekannten Verfahren erfolgen (z.B. US 3,914,345; US 4,474,711; US 4,485,052; US 4,839,105; US 5,128,495).

Als Cyanhydrine der Formel (III) sind unter anderem die folgenden geeignet und bevorzugt: Acroleincyanhydrin, Methacroleincyanhydrin, Ethacroleincyanhydrin, und Phenylvinylketoncyanhydrin.

Die Herstellung der Cyanhydrine der Formel (III) ist dem Fachmann bekannt und kann nach literaturbekannten Verfahren erfolgen (z.B. aus US 3,850,976 oder US 4,336,206).

Vorzugsweise gilt für das erfindungsgemäße Verfahren
R³ und R⁴ bedeuten jeweils unabhängig voneinander Wasserstoff oder Methyl,
und/oder
X bedeutet Sauerstoff,
und/oder
n ist 1.

Das erfindungsgemäße Verfahren betrifft vorzugsweise die Herstellung phosphorhaltiger Cyanhydrine der Formel (Ia) 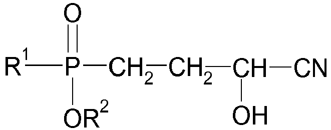 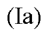 dadurch gekennzeichnet, dass eine Verbindung der Formel (IIa) 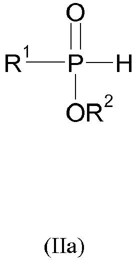 mit Acroleincyanhydrin der Formel (IIIa) 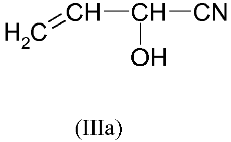 bei einer Temperatur im Bereich von 50 bis 105°C umgesetzt wird, vorzugsweise bei einer Temperatur im Bereich von 60 bis 95°C, bevorzugt bei einer Temperatur im Bereich von 65 bis 90°C, wobei jeweils gilt:
- R¹: bedeutet (C₁-C₆)-Alkyl, (C₁-C₆)-Haloalkyl, (C₆-C₈)-Aryl, (C₆-C₈)-Haloaryl, (C₇-C₁₀)-Aralkyl, (C₇-C₁₀)-Haloaralkyl, (C₅-C₈)-Cycloalkyl oder (C₅-C₈)-Halocycloalkyl,
- R²: bedeutet (C₁-C₆)-Alkyl, (C₁-C₆)-Haloalkyl, (C₆-C₈)-Aryl, (C₆-C₈)-Haloaryl, (C₇-C₁₀)-Aralkyl, (C₇-C₁₀)-Haloaralkyl, (C₅-C₈)-Cycloalkyl oder (C₅-C₈)-Halocycloalkyl.

Bevorzugt gilt dabei jeweils:
- R¹: bedeutet (C₁-C₄)-Alkyl oder (C₁-C₄)-Haloalkyl, bevorzugt Methyl oder Ethyl,
- R²: bedeutet (C₁-C₆)-Alkyl oder (C₁-C₆)-Haloalkyl, bevorzugt (C₃-C₆)-Alkyl, dabei wiederum bevorzugt C₄-Alkyl oder C₅-Alkyl.

Besonders bevorzugt gilt dabei jeweils:
- R¹: bedeutet Methyl,

- R²: bedeutet C₄-Alkyl oder C₅-Alkyl, bevorzugt n-Butyl oder n-Pentyl,
d.h. besonders bevorzugt werden Verbindungen der Formel (IIb) eingesetzt, 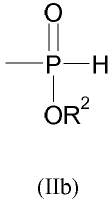 wobei R² n-Butyl oder n-Pentyl bedeutet

Das erfindungsgemäße Verfahren wird unter Bedingungen durchgeführt, in denen Radikale gebildet werden.

Die Umsetzung der Verbindungen der Formel (II) und (III) bzw. (IIa) und (IIIa) zu den Verbindungen der Formel (I) bzw. (Ia) in einem erfindungsgemäßen Verfahren kann mit Hilfe einer radikalbildenden Strahlungsquelle (wie UV-, Gamma- oder Röntgenstrahlen) erfolgen, oder in Gegenwart einer oder mehrerer radikalbildender Substanzen.

Im Rahmen des erfindungsgemäßen Verfahrens werden radikalbildende Substanzen eingesetzt, nämlich Radikalbildner der nachfolgend definierten Formel (IV): 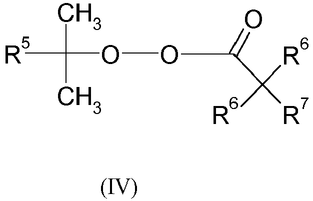 wobei
- R⁵: Methyl, Ethyl, 2,2-Dimethylpropyl oder Phenyl bedeutet,
- R⁶: unabhängig voneinander (C₁-C₁₀)-Alkyl bedeutet, vorzugsweise (C₁-C₆)-Alkyl, bevorzugt (C₁-C₄)-Alkyl,
und
- R⁷: Wasserstoff oder (C₁-C₁₀)-Alkyl bedeutet, vorzugsweise Wasserstoff oder (C₁-C₆)-Alkyl, bevorzugt Wasserstoff oder (C₁-C₄)-Alkyl.

Die Radikalbildner der Formel (IV) sind an sich bekannt und zum Teil kommerziell erhältlich.

Die Radikalbildner der Formel (IV) sind dabei vorzugsweise gewählt aus der Gruppe bestehend aus tert-Butylperoxypivalat, tert-Amylperoxypivalat, tert-Butylperoxyneodecanoat, 1,1,3,3-Tetramethylbutylperoxyneodecanoat, tert-Butylperoxy-2-ethylhexanoat, 1,1,3,3-Tetramethylbutylperoxy-2-ethylhexanoat, tert-Amylperoxyneodecanoat, Cumylperoxyneodecanoat, Cumylperoxyneoheptanoat, Cumylperoxypivalat, und deren Mischungen.

Die Radikalbildner der Formel (IV) sind dabei bevorzugt gewählt aus der Gruppe bestehend aus tert-Butylperoxyneodecanoat, 1,1,3,3-Tetramethylbutylperoxyneodecanoat, tert-Butylperoxy-2-ethylhexanoat, 1,1,3,3-Tetramethylbutylperoxy-2-ethylhexanoat, Cumylperoxyneodecanoat, und deren Mischungen, dabei wiederum besonders bevorzugt sind 1,1,3,3-Tetramethylbutylperoxyneodecanoat, tert-Butylperoxyneodecanoat und/oder tert-Butylperoxy-2-ethylhexanoat.

Insbesondere die als bevorzugt angegebenen Radikalbildner ermöglichen eine sehr gute Reaktionsführung unter milden Reaktionsbedingungen, insbesondere in dem als bevorzugt angegebenen Temperaturbereich, wodurch die gewünschten phosphorhaltigen Cyanhydrine der Formel (I) bzw. (Ia) in hohen Ausbeuten und hoher Reinheit erhalten werden können.

Vorzugsweise werden insgesamt 0,1 bis 10 mol%, bevorzugt 0,25 bis 7 mol%, weiter bevorzugt 0,5 bis 7 mol%, insbesondere bevorzugt 0,5 bis 5 mol%, an Radikalbildnern der Formel (IV) verwendet, bezogen auf die insgesamt eingesetzte Menge an Cyanhydrin der Formel (III) bzw. (IIIa).

Der Radikalbildner der Formel (IV) oder ein Gemisch von Radikalbildnern der Formel (IV) kann zusammen mit dem Cyanhydrin der Formel (III) bzw. (IIIa) vermischt werden, und zur vorgelegten Verbindung der Formel (II) bzw. (IIa) zudosiert, d.h. dosierungskontrolliert zugegeben, werden. Der Radikalbildner oder ein Gemisch von Radikalbildnern der Formel (IV) kann alternativ auch mit dem phosphorhaltigen Edukt (II) bzw. (IIa) vermischt oder in reiner Form simultan separat neben dem Cyanhydrin der Formel (III) bzw. (IIIa) dosierungskontrolliert zugegeben werden.

Der Radikalbildner oder ein Gemisch von Radikalbildnern der Formel (IV) wird vorzugsweise mit dem phosphorhaltigen Edukt (II) bzw. (IIa) vermischt oder kann auch in reiner Form simultan separat neben dem Cyanhydrin der Formel (III) bzw. (IIIa) dosierungskontrolliert zugegeben werden. Der Radikalbildner der Formel (IV) oder ein Gemisch von Radikalbildnern der Formel (IV) kann alternativ auch zusammen mit dem Cyanhydrin der Formel (III) bzw. (IIIa) vermischt, und zur vorgelegten Verbindung der Formel (II) bzw. (IIa) zudosiert, d.h. dosierungskontrolliert zugegeben werden.

Wenn in den nachfolgenden Ausführungen von einer "Teilmenge" gesprochen wird, wird in der dort jeweils definierten Verfahrensweise lediglich ein Teil der insgesamt in dem erfindungsgemäßen Verfahren eingesetzten Menge verwendet.

Das erfindungsgemäße Verfahren kann in der Weise durchgeführt werden, dass der bzw. die Radikalbildner der Formel (IV) oder eine Teilmenge des Radikalbildners bzw. der Radikalbildner der Formel (IV) mit einer Teilmenge oder der Gesamtmenge der Verbindung (III) bzw. (IIIa) vorvermischt wird ("Mischung IV + III"),
und diese Mischung, d.h. "Mischung IV + III", in das Reaktionsgefäß eindosiert wird.

Das erfindungsgemäße Verfahren wird vorzugsweise in der Weise durchgeführt, dass
- Verbindung (III) bzw. (IIIa) mit einer Teilmenge der Verbindung (II) bzw. (IIa) vorvermischt wird ("Mischung III + II"),
- davon räumlich getrennt (d.h. in einem separaten Behältnis) eine Teilmenge der Verbindung (II) bzw. (IIa) mit dem Radikalbildner (IV) vorvermischt wird ("Mischung II + IV"),
und diese beide Mischungen, d.h. "Mischung III + II" und "Mischung II + IV", gleichzeitig in das Reaktionsgefäß eindosiert werden.

Mit den nachfolgenden bevorzugten Verfahrensweisen werden die phosphorhaltigen Cyanhydrine der Formel (I) bzw. (Ia) besonders gut und in noch besserer Ausbeute erhalten.

Das erfindungsgemäße Verfahren wird entsprechend bevorzugt in der Weise durchgeführt, dass der oder die Radikalbildner der Formel (IV) oder eine Teilmenge des Radikalbildners bzw. der Radikalbildner der Formel (IV) mit einer Teilmenge oder der Gesamtmenge der Verbindung (II) bzw. (IIa) vorvermischt wird ("Mischung IV + II"),
und diese Mischung, d.h. "Mischung IV + II", gleichzeitig mit und separat von der Verbindung der Formel (III) bzw. (IIIa) in das Reaktionsgefäß eindosiert wird.

Dabei wird Verbindung der Formel (III) bzw. (IIIa) vorzugsweise aus einem separaten, baulich getrennten Behältnis in das Reaktionsgefäß eindosiert.

Im Falle der Batch-Fahrweise, dabei in Abhängigkeit von der Batchgröße, dauert die gleichzeitige Eindosierung in jedem der vorgenannten Verfahrensweisen vorzugsweise länger als 30 Minuten, bevorzugt 30 Minuten bis 20 Stunden, besonders bevorzugt 1 bis 12 Stunden.

Die vorstehend definierten Mischungen "Mischung IV + III", "Mischung IV + II", "Mischung III + II", und "Mischung II + IV" sind zum Teil ebenfalls Gegenstand der vorliegenden Erfindung.

Folglich betrifft die vorliegende Erfindung auch eine Mischung, ausgewählt aus der Gruppe bestehend aus
- Mischung umfassend eine oder mehrere Verbindungen der Formel (IV) und eine Verbindung der Formel Verbindung (III), nämlich eine Verbindung der Formel Verbindung (IIIa);
- Mischung umfassend eine oder mehrere Verbindungen der Formel (IV) und eine Verbindungen der Formel Verbindung (II), nämlich eine Verbindung der Formel Verbindung (IIa);
- Mischung umfassend eine Verbindungen der Formel (III), nämlich eine Verbindung der Formel Verbindung (IIIa), und eine Verbindungen der Formel Verbindung (II), nämlich eine Verbindung der Formel Verbindung (IIa), wobei eine solche Mischung vorzugsweise keine Verbindung der vorstehend definierten Formel (IV) und/oder keine Verbindung der vorstehend definierten Formel (I) enthält,
wobei die Verbindungen der Formel (IIa), (IIIa) und (IV) jeweils die oben definierte Struktur aufweisen, vorzugsweise jeweils eine vorstehend als bevorzugt bzw. besonders bevorzugt definierten Struktur, und wobei R¹ Methyl und R² n-Butyl bedeutet.

Offenbart ist auch eine Mischung, ausgewählt aus der Gruppe bestehend aus
- Mischung umfassend eine oder mehrere Verbindungen der Formel (IV) und eine oder mehrere Verbindungen der Formel Verbindung (IIIa),
- Mischung umfassend eine oder mehrere Verbindungen der Formel (IV) und eine oder mehrere Verbindungen der Formel Verbindung (IIa),
wobei die Verbindungen der Formel (IIa), (IIIa) und (IV) jeweils die oben definierte Struktur aufweisen, vorzugsweise jeweils eine vorstehend als bevorzugt bzw. besonders bevorzugt definierte Struktur. Bevorzugte erfindungsgemäße Mischungen umfassen oder bestehen aus
- einem oder mehreren Radikalbildnern der Formel (IV) ausgewählt aus der Gruppe bestehend aus tert-Butylperoxypivalat, tert-Amylperoxypivalat, tert-Butylperoxyneodecanoat, 1,1,3,3-Tetramethylbutylperoxyneodecanoat, tert-Butylperoxy-2-ethylhexanoat, 1,1,3,3-Tetramethylbutylperoxy-2-ethylhexanoat, tert-Amylperoxyneodecanoat, Cumylperoxyneodecanoat, Cumylperoxyneoheptanoat, und Cumylperoxypivalat,
   und
- einer Verbindung der Formel (III), nämlich der Formel (IIIa).

Bevorzugte erfindungsgemäße Mischungen umfassen oder bestehen aus
- einem oder mehreren Radikalbildnern der Formel (IV) ausgewählt aus der Gruppe bestehend aus tert-Butylperoxypivalat, tert-Amylperoxypivalat, tert-Butylperoxyneodecanoat, 1,1,3,3-Tetramethylbutylperoxyneodecanoat, tert-Butylperoxy-2-ethylhexanoat, 1,1,3,3-Tetramethylbutylperoxy-2-ethylhexanoat, tert-Amylperoxyneodecanoat, Cumylperoxyneodecanoat, Cumylperoxyneoheptanoat, und Cumylperoxypivalat,
   und
- einer Verbindung der Formel (II), nämlich der Formel (IIa).

Das erfindungsgemäße Verfahren ermöglicht die Herstellung der phosphorhaltigen Cyanhydrine der Formel (I) bzw. (Ia) unter milden Reaktionsbedingungen, wodurch die phosphorhaltigen Cyanhydrine der Formel (I) bzw. (Ia) in sehr guten Ausbeuten erhalten werden, die signifikant höher sind als in US 4,521,348 bzw. DE 3047024 beschrieben.

So wird bei der Durchführung des erfindungsgemäßen Verfahrens beispielsweise eine Disproportionierung von Edukten der Formel (II) bzw. (IIa) signifikant reduziert oder weitgehend vermieden. Zudem wird bei der Durchführung des erfindungsgemäßen Verfahrens die Polymerisation der Verbindungen der Formel (III) bzw. (IIIa) signifikant reduziert oder weitgehend vermieden.

Ferner wurde gefunden, dass durch Vorvermischung (von Teilen) der Edukte der Formeln (II) und (III) bzw. (IIa) und (IIIa) die Polymerisationsneigung von Verbindungen der Formel (III) bzw. (IIIa) noch weiter herabgesetzt werden.

Es ist im Rahmen des erfindungsgemäßen Verfahrens vorteilhaft, die Cyanhydrine der Formel (III) bzw. (IIIa) in möglichst hoher Reinheit einzusetzen. Vorzugsweise werden die Cyanhydrine der Formel (III) bzw. (IIIa) in einer Reinheit von größer oder gleich 90 Gew.-% eingesetzt, bevorzugt von größer oder gleich 92 Gew.-%.

Es ist im Rahmen des erfindungsgemäßen Verfahrens vorteilhaft, die Cyanhydrine der Formel (III) bzw. (IIIa) mit einer oder mehreren Säuren zu stabilisieren, wobei vorzugsweise ein pH-Wert im Bereich von 2-4 (gemessen bei 25°C) eingestellt wird. Als Säure zur Stabilisierung können dabei beispielweise Phosphorsäure, Polyphosphorsäure und/oder Essigsäure eingesetzt werden.

Die gebildeten phosphorhaltigen Cyanhydrine der Formel (I) bzw. (Ia) können als Ausgangsstoffe zur Synthese von phosphorhaltigen Aminosäuren wie beispielsweise Glufosinat verwendet werden (ein solcher Syntheseweg wird weiter unten näher beschrieben). Der Einsatz von Cyanhydrinen der Formel (III) bzw. (IIIa) ist auch deshalb von Vorteil, da dadurch die Einführung einer Schutzgruppe für die OH-Gruppe in den Verbindungen der Formel (I) bzw. (Ia) und (III) bzw. (IIIa) entfällt und die Synthese somit insgesamt vereinfacht wird.

Zur Vermeidung unerwünschter Nebenreaktionen und damit zur Erzielung hoher Ausbeuten ist es zudem vorteilhaft, das phosphorhaltige Edukt (II) bzw. (IIa), bezogen auf das Cyanhydrin der Formel (III) bzw. (IIIa), im molaren Überschuss einzusetzen.

Vorzugsweise liegt in dem erfindungsgemäßen Verfahren das molare Verhältnis der Gesamtmenge des eingesetzten phosphorhaltigen Eduktes (II) bzw. (IIa) zu der Gesamtmenge des eingesetzten Cyanhydrins der Formel (III) bzw. (IIIa) im Bereich von 3 : 2 bis 8 : 1, bevorzugt im Bereich von 2 : 1 bis 6 : 1, weiter bevorzugt im Bereich von 5 : 2 bis 5 : 1, besonders bevorzugt im Bereich von 2,8 : 1 bis 4,0 : 1.

Das erfindungsgemäße Verfahren kann sowohl in Batch-Fahrweise als auch in kontinuierlicher Fahrweise (d.h. kontinuierlicher Prozessführung) durchgeführt werden.

Das erfindungsgemäße Verfahren wird vorzugsweise unter Inertisierung, bevorzugt in einer Schutzgasatmosphäre durchgeführt. Bevorzugte Schutzgase sind dabei Stickstoff bzw. Argon.

Es ist ferner möglich, das erfindungsgemäße Verfahren unter Überdruck oder unter vermindertem Druck durchzuführen.

Das erfindungsgemäße Verfahren kann in einem Verdünnungsmittel durchgeführt werden.

Als Verdünnungsmittel sind grundsätzlich verschiedene organische Lösungsmittel einsetzbar, vorzugsweise Toluol, Xylol, Chlorbenzol, Dichlorbenzol, Dimethylformamid (DMF), Dimethylacetamid, N-Methyl-2-pyrrolidon (NMP), oder Mischungen dieser organischen Lösungsmittel. Bevorzugt wird das erfindungsgemäße Verfahren ohne solche Lösungsmittel durchgeführt.

Es kann allerdings vorteilhaft sein, das erfindungsgemäße Verfahren in bereits vorher gebildetem Reaktionsprodukt der Formel (I) bzw. (Ia) als Verdünnungsmittel durchzuführen.

Es kann vorteilhaft sein, das erfindungsgemäße Verfahren in dem Edukt der Formel (II) bzw. (IIa) als Verdünnungsmittel durchzuführen, vorzugsweise wird dabei eine Teilmenge des Eduktes der Formel (II) bzw. (IIa) in dem Reaktionsgefäß oder Reaktor vorgelegt.

Insbesondere bei kontinuierlicher Fahrweise ist es vorteilhaft, das erfindungsgemäße Verfahren in bereits vorher gebildetem Reaktionsprodukt der Formel (I) bzw. (Ia) oder in einem Gemisch von Reaktionsprodukt der Formel (I) bzw. (Ia) und Edukt der Formel (II) bzw. (IIa) als Verdünnungsmittel durchzuführen.

Die Ausbeuten nach dem erfindungsgemäßen Verfahren betragen regelmäßig 90-98% bezogen auf die Komponente der Formel (III) bzw. (IIIa) und regelmäßig 88-96% bezogen auf die Komponente der Formel (II) bzw. (IIa).

Die Reinheit der Produkte nach Reinigung, zum Beispiel nach destillativem Entfernen des Überschusses der Komponente (II) bzw. (IIa), beträgt regelmäßig 90 bis 96%. Der zurückgewonnene Überschuss der Ausgangsverbindung (II) kann anschließend ohne weitere Reinigung wieder in dieselbe Reaktion eingesetzt werden.

In einem weiteren Aspekt betrifft die vorliegende Erfindung bestimmte phosphorhaltige Cyanhydrine der Formel (Ib) 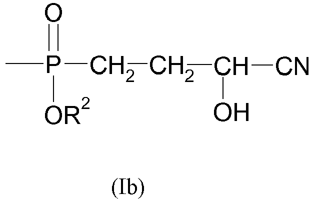 wobei R² entweder n-Butyl oder n-Pentyl bedeutet, bevorzugt n-Butyl.

Es hat sich in eigenen Untersuchungen herausgestellt, dass diese beiden Verbindungen besonders gut mit dem erfindungsgemäßen Verfahren herstellbar sind, und diese beiden Verbindungen besonders vorteilhaft eingesetzt werden können in der weiteren Umsetzung zu entsprechenden agrochemischen Wirkstoffen, vorzugsweise zu herbizid wirksame Verbindungen, insbesondere zur Herstellung von Glufosinat und dessen Salzen.

Dies gilt insbesondere für die Verbindung der Formel (Ib) mit R² = n-Butyl, die nach dem erfindungsgemäßen Verfahren durch Umsetzung des phosphorhaltigen Edukts (IIa) mit R¹ = Methyl und R² = n-Butyl mit Acroleincyanhydrin der Formel (IIIa) erhalten wird.

Ganz besonders bevorzugt ist somit folgende Verbindung (Ib-nBu):

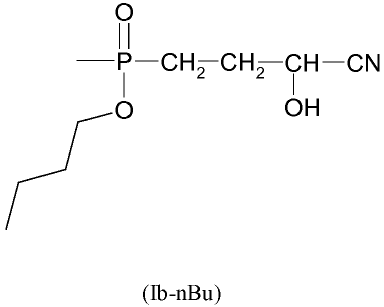

Entsprechend betrifft die vorliegende Erfindung auch die Verwendung der beiden phosphorhaltigen Cyanhydrine der Formel (Ib) zur Herstellung von Glufosinat bzw. von Glufosinat-Salzen.

Bei Glufosinat-Salzen im Rahmen der vorliegenden Erfindung handelt es sich vorzugsweise um Ammonium-Salze, Phosphonium-Salze, Sulfonium-Salze, Alkali-Salze und Erdalkali-Salze von Glufosinat.

Insbesondere bevorzugt im Rahmen der vorliegenden Erfindung sind Glufosinat, Glufosinat-Natrium bzw. Glufosinat-Ammonium.

Die Umsetzung der phosphorhaltigen Cyanhydrine der Formel (Ib) zu Glufosinat und dessen Salzen kann dabei analog zu den aus dem oben genannten Stand der Technik beschriebenen Verfahren erfolgen.

In einem weiteren Aspekt betrifft die vorliegende Erfindung die Herstellung von Glufosinat und/oder Glufosinat-Salzen 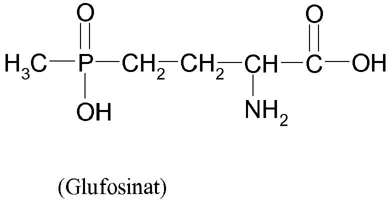 gekennzeichnet durch Umsetzung einer Verbindung der Formel (Ib), durch folgenden Schritt:
Umsetzung einer Verbindung der Formel (IIb) 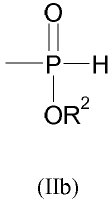 wobei R² n-Butyl oder n-Pentyl bedeutet
mit Acroleincyanhydrin der Formel (IIIa) 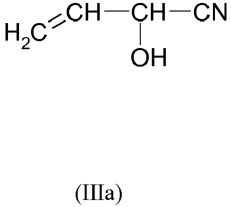 wobei die Umsetzung von (IIb) mit (IIIa) nach dem oben beschriebenen erfindungsgemäßen Verfahren erfolgt.

Das Verfahren zur Herstellung von Glufosinat und/oder Glufosinat-Salzen erfolgt im Weiteren vorzugsweise durch Umsetzung einer Verbindung der Formel (Ib) mit NH₃ zu Verbindung (V) 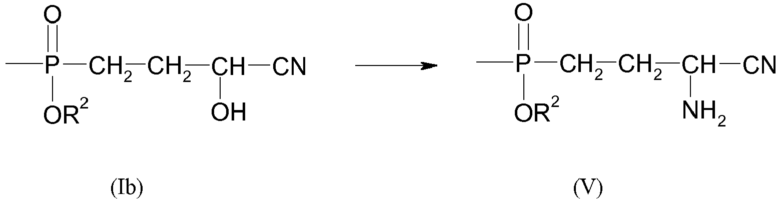 wobei R² jeweils n-Butyl oder n-Pentyl bedeutet, vorzugsweise n-Butyl,
und anschließender Hydrolyse von Verbindung (V) zu Glufosinat bzw. dessen Salzen, wobei die Umsetzung nach dem vorgehend beschriebenen erfindungsgemäßen Verfahren erfolgt.

Mittels dieses Verfahrens erhaltenes Glufosinat bzw. Glufosinat-Salz, dabei vorzugsweise Glufosinat-Natriumsalz oder Glufosinat-Ammoniumsalz, ist leichter zu reinigen bzw. zu isolieren. Ein Grund dafür ist, dass in den erfindungsgemäßen Verfahren weniger Koppel- und Nebenprodukte anfallen, beispielsweise im Vergleich zu den Verfahren gemäß US 4,521,348 oder US 4,599,207.

Die Erfindung betrifft mit Blick auf das oben Gesagte daher auch die neuen Verbindungen der Formel (AMN) 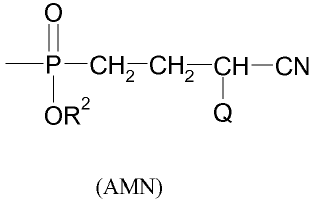 wobei
Q entweder OH oder NH₂ bedeutet,
R² entweder n-Butyl oder n-Pentyl bedeutet, vorzugsweise n-Butyl,
sowie deren Verwendung zur Herstellung von Glufosinat bzw. von Glufosinat-Salzen, insbesondere von Glufosinat, Glufosinat-Natrium und Glufosinat-Ammonium.

### Beispiele:

Sofern nicht anders angegeben beziehen sich alle Angaben auf das Gewicht.

### Beispiel 1: Acroleincyanhydrin (nicht Gegenstand der vorliegenden Erfindung)

100 g (0,791 mol) Acroleincyanhydrinacetat (99%ig) (z.B. erhältlich wie in US 4,336,206 beschrieben) wurden unter Inertisierung mit Stickstoff mit 300 ml trockenem Methanol vermischt und mit 60 g getrocknetem, zuvor aktiviertem* Ionentauscher (Amberlyst 15, Rohm & Haas) für 6 Tage bei 20°C gerührt. Nach beendeter Verseifung (GC-Kontrolle) wurde vom Ionentauscher abfiltriert und dieser mit trockenem Methanol gewaschen.

Die vereinigten Filtrate wurden mit 5 Tropfen konzentrierter Phosphorsäure (H₃PO₄) versetzt und anschließend am Rotationsverdampfer das Lösungsmittel bei max. 30°C und zuletzt 0,5 mbar entfernt. Als Rückstand wurden 65,6 g an Acroleincyanhydrin erhalten (98%ige Reinheit gemäß GC und NMR), entsprechend einer Ausbeute von 97,8% der Theorie. Das so erhaltene Acroleincyanhydrin wurde ohne weitere Reinigung verwendet.
NMR (CDCl₃):
¹H: 3,97 ppm (s); 5,01 ppm (d); 5,47 ppm (d); 5,63 ppm (d); 5,95 ppm (m);
¹³C: 62,03 ppm; 116,41 ppm; 117,38 ppm; 131,53 ppm.

*Die Aktivierung des Ionentauschers erfolgte durch Waschen mit halbkonzentrierter Salzsäure, anschließend mit Wasser, und zuletzt mit Ethanol. Der Ionentauscher wurde danach im Vakuum bei 60°C getrocknet (der Ionentauscher kann für dieselbe Reaktion mehrfach, d.h. wiederverwendet werden).

### Beispiel 2: n-Butyl (3-cyano-3-hydroxypropyl)methylphosphinat (ACM-H)

In einer Rührapparatur mit Impeller-Rührer wurden unter Stickstoff 20 g (0,1445 mol) Methanphosphonigsäure mono-n-butylester (98,5%ig, MPE, entsprechend Formel (IIb) mit R² = n-Butyl) vorgelegt und auf 85°C erhitzt. Hierzu wurden unter starkem Rühren 0,1 g an t-Butylperoxyneodecanoat (Radikalbildner der Formel (IV)) zugegeben. Anschließend wurden aus zwei verschiedenen Spritzenpumpen simultan folgende Mischungen zudosiert: in der einen Spritzenpumpe eine Mischung aus 5,0 g (0,036 mol) MPE und 5,1 g Acroleincyanhydrin (0,058 mol, Reinheit: 94%ig) und in der anderen Spritzenpumpe eine Mischung aus 15 g (0,1084 mol) MPE und 0,6 g t-Butylperoxyneodecanoat. Die Gesamtmenge an t-Butylperoxyneodecanoat entsprach damit 0,003 mol. Die simultane Eindosierung der beiden Mischungen in die Rührapparatur erfolgte bei konstanter Temperatur und kräftigem Rühren über einen Zeitraum von 2,5 Stunden. Das resultierende blassgelbe Reaktionsgemisch wurde nach beendeter simultaner Eindosierung beider Mischungen noch weitere 30 min bei 85°C gerührt und dann abgekühlt.

Gemäß ³¹P-NMR enthielt das Reaktionsgemisch 21,3 mol % des gewünschten Produktes (ACM-H) und 78,7 mol % des Eduktes MPE.

Gemäß ¹H-NMR enthielt das Reaktionsgemisch kein Edukt Acroleincyanhydrin mehr.

30,0 g des überschüssigen MPE wurden (auch zum Zwecke des Wiedereinsatzes) über eine Kurzwegverdampfer-Destillation abgetrennt (bei 105°C Manteltemperatur bis zu einem Druck von 0,2 mbar). Im Sumpf verblieben 12,5 g des gewünschten Produktes n-Butyl (3-cyano-3-hydroxypropyl)methylphosphinat (ACM-H) mit einer Reinheit von 95% (laut GC und NMR-Analyse). Die Ausbeute an ACM-H entspricht damit 93,6% der Theorie bezogen auf Acroleincyanhydrin.
NMR (CDCl₃):
¹H: 0,95ppm (t); 1,41ppm (m); 1,52 ppm (d,d); 1,65 ppm (m); 2,0 ppm (m); 2,1 ppm (m); 4,0 ppm (m); 4,58 ppm (m); 6,15 ppm (s).
³¹P-NMR: 55,5 ppm.

### Beispiel 3: n-Butyl (3-cyano-3-hydroxypropyl)methylphosphinat (ACM-H)

Die Ansatzgröße entsprach der aus Beispiel 2 und die Reaktionsdurchführung erfolgte analog zu Beispiel 2, wobei jedoch als Radikalbildner t-Butylperoxy-2-ethylhexanoat anstelle von t-Butylperoxyneodecanoat eingesetzt wurde, und die Menge an t-Butylperoxy-2-ethylhexanoat von 0,04 mol pro mol Acroleincyanhydrin betrug. Die Reaktionstemperatur lag bei 88°C, die Dosierzeit betrug 1,5 Stunden.

Das Reaktionsgemisch enthielt noch 3% des Eduktes Acroleincyanhydrin. Acroleincyanhydrin und überschüssiges MPE wurden wie oben beschrieben über eine Kurzwegverdampfer-Destillation abgetrennt.

Die ermittelte Ausbeute an ACM-H entsprach 90% der Theorie bezogen auf Acroleincyanhydrin.

### Beispiel 4: n-Butyl (3-cyano-3-hydroxypropyl)methylphosphinat (ACM-H)

Die Ansatzgröße entsprach der aus Beispiel 2 und die Reaktionsdurchführung erfolgte analog zu Beispiel 2, wobei jedoch als Radikalbildner ein Gemisch von t-Butylperoxy-2-ethylhexanoat und t-Butylperoxyneodecanoat (jeweils 0,04 mol pro mol Acroleincyanhydrin) eingesetzt wurde. Die Reaktionstemperatur lag bei 88°C, die Dosierzeit betrug 2 Stunden. Die weitere Aufarbeitung erfolgte wie oben beschrieben.

Das Reaktionsgemisch enthielt noch Spuren des Eduktes Acroleincyanhydrin.

Die ermittelte Ausbeute an ACM-H entsprach 93% der Theorie bezogen auf Acroleincyanhydrin.

### Beispiel 5: n-Butyl (3-cyano-3-hydroxypropyl)methylphosphinat (ACM-H)

Apparatur: Erstes Rührgefäß mit Heizmantel, zwei Dosierpumpen, und Bodenablassventil, welches mit einem zweiten Rührgefäß verbunden war; die Rührgefäße waren jeweils mit einem Impeller-Rührer ausgestattet.

### Durchführung: quasi-kontinuierliche Fahrweise

### Verfahrensabschnitt 1:

Analog der Versuchsbeschreibung in Beispiel 2 wurden in dem ersten Rührgefäß 21 g MPE unter Stickstoffatmosphäre vorgelegt, mit 0,1 g t-Butylperoxy-2-ethylhexanoat versetzt und auf 88°C erwärmt. Danach wurden unter kräftigem Rühren in dieses erste Rührgefäß aus zwei verschiedenen Spritzenpumpen zum Einen eine Mischung aus 8,06 g Acroleincyanhydrin und 11,94 g MPE und zum Anderen eine Mischung aus 19 g MPE, 0,93 g t-Butylperoxyneodecanoat und 0,7 g t-Butylperoxy-2-ethylhexanoat unter konstanter Temperatur über einen Zeitraum von 2 Stunden simultan zudosiert.

### Verfahrensabschnitt 2:

Die Reaktionstemperatur wurde weiter bei 88°C gehalten. Anschließend wurde während weiterer 2 Stunden noch einmal die gleichen Mengen der gleichen beiden Mischungen von Acroleincyanhydrin und MPE bzw. MPE, t-Butylperoxyneodecanoat und t-Butylperoxy-2-ethylhexanoat wie vorstehend beschrieben über dieselben Spritzenpumpen in das erste Rührgefäß separat zudosiert. Zusätzlich wurden weitere 21 g MPE zugetropft und gleichzeitig aus dem ersten Rührgefäß durch langsamen Ablauf durch das Bodenventil in das auf 80°C geheizte zweite Rührgefäß ein konstanter Ablauf gewährleistet und damit auch ein konstanter Füllstand im ersten Reaktor erhalten.

### Verfahrensabschnitt 3:

Nach beendeter Zudosierung der beiden Mischungen und des MPE wurde Verfahrensabschnitt 2 noch einmal wiederholt.

In dem anschließend erhaltenen Reaktionsgemisch war kein Acroleincyanhydrin mehr enthalten.

Die Mischung wurde zur Aufarbeitung über einen Kurzwegverdampfer bei 115°C Manteltemperatur, 0,2-0,5 mbar gereinigt. Das als Destillat erhaltene überschüssige MPE (115 g) wurde in späteren Ansätzen wiederverwendet.

Im Destillationssumpf verblieben 58,6 g an n-Butyl (3-cyano-3-hydroxypropyl)methylphosphinat (94,8% Rohausbeute), welches direkt, d.h. ohne weitere Reinigung, in die Folgereaktionen eingesetzt werden konnte, z.B. zur Herstellung von Glufosinat-Ammonium.

### Beispiel 6: n-Butyl (3-cyano-3-hydroxypropyl)methylphosphinat (ACM-H)

In einem mit Stickstoff inertisierten Mantelrührgefäß mit Thermometer, Impeller-Rührer und einem Bodenauslassventil, dessen Auslass in einen heizbaren, mit Rührer versehenen Kolben führte, wurde zunächst die Startreaktion durchgeführt.

### Startreaktion:

Zunächst wurden 27 g MPE vorgelegt und auf 76°C erwärmt. Danach wurden 0,1 g an Starter (1,1,3,3-Tetramethylbutyl-peroxyneodecanoat, kommerziell erworben als Trigonox® 423) zugegeben. Anschließend wurden mittels zwei verschiedenen Spritzenpumpen simultan folgende Mischungen zudosiert: in der einen Spritzenpumpe eine Mischung von 9,7 g (97%ig) Acroleincyanhydrin und 10,0 g MPE und simultan in der anderen Spritzenpumpe eine Mischung von 18,0 g MPE und 2,4 g Trigonox® 423. Beide Mischungen wurden über 2 Stunden gleichmäßig zudosiert, wobei die Temperatur im Mantelrührgefäß bei 76°C gehalten wurde.

### Kontinuierliche Reaktionsführung:

Wie vorstehend beschrieben wurden anschließend bei gleicher Temperatur gleichmäßig über 6 Stunden simultan zwei Mischungen in das Reaktionsgefäß eindosiert:
Über eine erste Pumpe wurde eine Mischung aus 29,1 g Acroleincyanhydrin und 30 g MPE, und über eine zweite Pumpe eine Mischung aus 54 g MPE und 7,2 g Trigonox® 423 in das Reaktionsgefäß eindosiert. Simultan wurden über denselben Zeitraum aus einen drittem Dosierbehälter insgesamt 81 g MPE gleichmäßig zugetropft. Um einen konstanten Füllstand in dem Reaktionsgefäß zu halten, wurden über die gesamte Dosierdauer insgesamt 195 g des entstandenen Reaktionsgemisches in den mit einem Rührer versehenen, auf 76°C gehaltenen Kolben durch das Bodenventil abgelassen.

Das Reaktionsgemisch war blassgelb und klar. Nach einer Nachreaktionszeit von etwa 15 min wurden die Reaktionsgemische vereinigt. Zur Aufarbeitung wurden die niedrigsiedenden Komponenten (einschließlich des überschüssigen MPE) über einen Kurzwegverdampfer abdestilliert (0,2 mbar/115°C). Das im Sumpf verbliebene Rohprodukt kann in dieser Form direkt für weitere Reaktionen verwendet werden. Es wurden 101,8 g Produkt (der GC-gehalt an ACM-H betrug 91,5%) erhalten, entsprechend einer Ausbeute von 94% der Theorie bezogen auf Acroleincyanhydrin.

### Beispiel 7: Ammonium-D,L-homoalanin-4-yl(methyl)phosphinat (Glufosinat-ammonium)

Aus 218 g (0,885 mol) n-Butyl (3-cyano-3-hydroxypropyl)methylphosphinat (Reinheit: 89%ig) wurde ähnlich zu den in US 6,359,162B1 bzw. CN 102399240A beschriebenen Verfahren mit Ammoniak und mit Salzsäure weiter umgesetzt. Zuletzt wurde Ammoniak zugegeben, so dass eine wässrige Lösung des Ammoniumsalzes erhalten wurde.

Auf diese Weise wurden 742,2 g einer wässrigen Lösung erhalten, welche 22,5% an Glufosinat-Ammonium enthielt, entsprechend einer Ausbeute von 95,2% der Theorie.

## Patentansprüche

1. Verfahren zur Herstellung einer Verbindung der Formel (I) 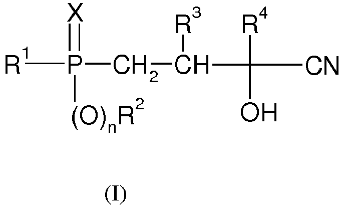 **dadurch gekennzeichnet, dass** eine Verbindung der Formel (II) 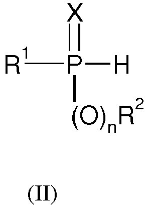 mit einem Cyanhydrin der Formel (III) 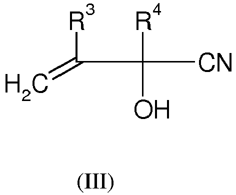 bei einer Temperatur im Bereich von 50 bis 105°C umgesetzt wird,
wobei jeweils gilt:
R¹ bedeutet (C₁-C₁₂)-Alkyl, (C₁-C₁₂)-Haloalkyl, (C₆-C₁₀)-Aryl, (C₆-C₁₀)-Haloaryl, (C₇-C₁₀)-Aralkyl, (C₇-C₁₀)-Haloaralkyl, (C₄-C₁₀)-Cycloalkyl oder (C₄-C₁₀)-Halocycloalkyl,
R² bedeutet (C₁-C₁₂)-Alkyl, (C₁-C₁₂)-Haloalkyl, (C₆-C₁₀)-Aryl, (C₆-C₁₀)-Haloaryl, (C₇-C₁₀)-Aralkyl, (C₇-C₁₀)-Haloaralkyl, (C₄-C₁₀)-Cycloalkyl oder (C₄-C₁₀)-Halocycloalkyl,
R³ und R⁴ bedeuten jeweils unabhängig voneinander Wasserstoff, (C₁-C₄)-Alkyl, Phenyl oder Benzyl,
X bedeutet Sauerstoff oder Schwefel,
n ist 0 oder 1, und
die Umsetzung in Gegenwart eines oder mehrerer Radikalbildner der Formel (IV) erfolgt 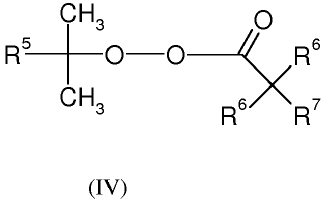 wobei
R⁵ Methyl, Ethyl, 2,2-Dimethylpropyl oder Phenyl bedeutet,
R⁶ unabhängig voneinander (C₁-C₁₀)-Alkyl bedeutet, vorzugsweise (C₁-C₆)-Alkyl, bevorzugt (C₁-C₄)-Alkyl,
und
R⁷ Wasserstoff oder (C₁-C₁₀)-Alkyl bedeutet, vorzugsweise Wasserstoff oder (C₁-C₆)-Alkyl, bevorzugt Wasserstoff oder (C₁-C₄)-Alkyl.

2. Verfahren nach Anspruch 1, **dadurch gekennzeichnet, dass** die Umsetzung bei einer Temperatur im Bereich von 60 bis 95°C erfolgt, bevorzugt bei einer Temperatur im Bereich von 65 bis 90°C.

3. Verfahren nach Anspruch 1 oder 2, **dadurch gekennzeichnet, dass** eine Verbindung der Formel (IIa) 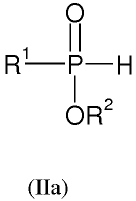 mit dem Acroleincyanhydrin der Formel (IIIa) 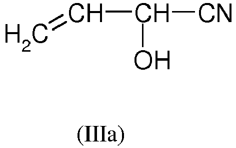 umgesetzt wird, wobei gilt:
R¹ bedeutet (C₁-C₆)-Alkyl, (C₁-C₆)-Haloalkyl, (C₆-C₈)-Aryl, (C₆-C₈)-Haloaryl, (C₇-C₁₀)-Aralkyl, (C₇-C₁₀)-Haloaralkyl, (C₅-C₈)-Cycloalkyl oder (C₅-C₈)-Halocycloalkyl,
R² bedeutet (C₁-C₆)-Alkyl, (C₁-C₆)-Haloalkyl, (C₆-C₈)-Aryl, (C₆-C₈)-Haloaryl, (C₇-C₁₀)-Aralkyl, (C₇-C₁₀)-Haloaralkyl, (C₅-C₈)-Cycloalkyl oder (C₅-C₈)-Halocycloalkyl.

4. Verfahren nach einem der Ansprüche 1 bis 3, **dadurch gekennzeichnet, dass** die Umsetzung in Gegenwart eines oder mehrerer Radikalbildner erfolgt ausgewählt aus der Gruppe bestehend aus tert-Butylperoxypivalat, tert-Amylperoxypivalat, tert-Butylperoxyneodecanoat, 1,1,3,3-Tetramethylbutylperoxyneodecanoat, tert-Butylperoxy-2-ethylhexanoat, 1,1,3,3-Tetramethylbutylperoxy-2-ethylhexanoat, tert-Amylperoxyneodecanoat, Cumylperoxyneodecanoat, Cumylperoxyneoheptanoat, und Cumylperoxypivalat.

5. Verfahren nach einem der Ansprüche 1 bis 4, **dadurch gekennzeichnet, dass** das molare Verhältnis der Gesamtmenge des eingesetzten phosphorhaltigen Eduktes (II) bzw. (IIa) zu der Gesamtmenge des eingesetzten Cyanhydrins der Formel (III) bzw. (IIIa) im Bereich von 2 : 1 bis 8 : 1 liegt.

6. Verfahren nach einem der Ansprüche 1 bis 5, **dadurch gekennzeichnet, dass** der oder die Radikalbildner der Formel (IV) oder eine Teilmenge der Radikalbildner der Formel (IV) mit einer Teilmenge oder der Gesamtmenge an Verbindung (II) bzw. (IIa) vorvermischt wird, und diese Mischung gleichzeitig mit der Verbindung der Formel (III) bzw. (IIIa) in das Reaktionsgefäß eindosiert wird.

7. Mischung, ausgewählt aus der Gruppe bestehend aus
- Mischungen umfassend eine oder mehrere Verbindungen der Formel (IV) und eine Verbindung der Formel Verbindung (IIIa),
- Mischungen umfassend eine oder mehrere Verbindungen der Formel (IV) und eine Verbindung der Formel Verbindung (IIa),
- Mischungen umfassend eine Verbindung der Formel (IIIa) und eine Verbindung der Formel Verbindung (IIa),
wobei die Verbindungen der Formel (IIa) und (IIIa) die in Anspruch 3 definierte Struktur aufweisen, und die Verbindungen der Formel (IV) die in Anspruch 1 definierte Struktur aufweisen,
wobei R¹ Methyl und R² n-Butyl bedeutet.

8. Verfahren zur Herstellung von Glufosinat und/oder Glufosinat-Salzen 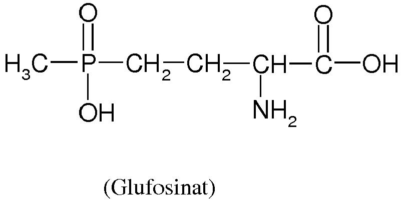 **gekennzeichnet, durch** folgenden Schritt:
Umsetzung einer Verbindung der Formel (Ib) zu der entsprechenden Verbindung der Formel (V), 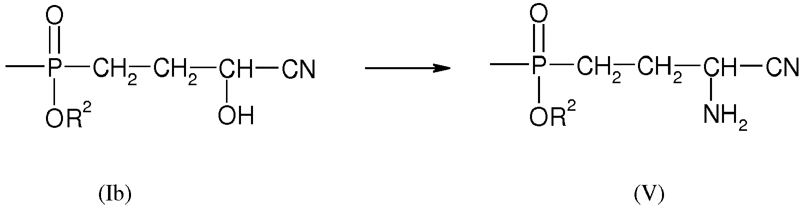 wobei R² jeweils entweder n-Butyl oder n-Pentyl bedeutet,
und wobei die Herstellung von Verbindung (Ib) gemäß einem in den Ansprüchen 1 bis 6 definierten Verfahren erfolgt.

9. Verfahren nach Anspruch 8, **dadurch gekennzeichnet, dass** die Herstellung von Verbindung (V) durch Umsetzung von Verbindung (Ib) mit NH₃ erfolgt.

10. Verfahren nach Anspruch 8 oder 9, wobei R² jeweils n-Butyl bedeutet.

11. Verbindung der Formel (AMN) 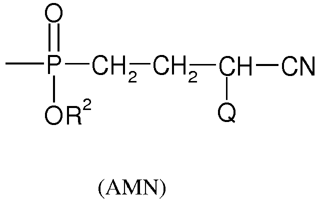 wobei
Q entweder OH oder NH₂ bedeutet,
R² entweder n-Butyl oder n-Pentyl bedeutet, vorzugsweise n-Butyl.

12. Verwendung einer Verbindung gemäß Anspruch 11 zur Herstellung von Glufosinat bzw. von Glufosinat-Salzen, insbesondere von Glufosinat, Glufosinat-Natrium oder Glufosinat-Ammonium.

## Claims

1. A process for preparing a compound of the formula (I) 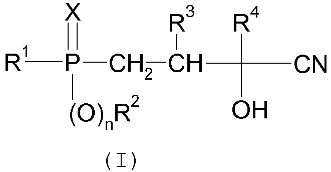 wherein a compound of the formula (II) 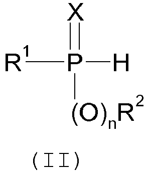 is reacted with a cyanohydrin of the formula (III) 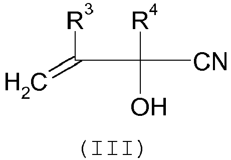 at a temperature in the range from 50 to 105°C,
where in each case:
R¹ is (C₁-C₁₂)-alkyl, (C₁-C₁₂)-haloalkyl, (C₆-C₁₀)-aryl, (C₆-C₁₀)-haloaryl, (C₇-C₁₀)-aralkyl, (C₇-C₁₀)-haloaralkyl, (C₄-C₁₀)-cycloalkyl or (C₄-C₁₀)-halocycloalkyl,
R² is (C₁-C₁₂)-alkyl, (C₁-C₁₂)-haloalkyl, (C₆-C₁₀)-aryl, (C₆-C₁₀)-haloaryl, (C₇-C₁₀)-aralkyl, (C₇-C₁₀)-haloaralkyl, (C₄-C₁₀)-cycloalkyl or (C₄-C₁₀)-halocycloalkyl,
R³ and R⁴ are in each case independently of one another hydrogen, (C₁-C₄)-alkyl, phenyl or benzyl,
X is oxygen or sulfur,
n is 0 or 1, and
the reaction takes place in the presence of one or more radical initiators of the formula (IV) 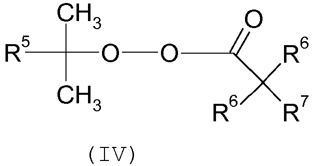 where
R⁵ is methyl, ethyl, 2,2-dimethylpropyl or phenyl,
R⁶ independently at each occurrence is (C₁-C₁₀)-alkyl, preferably (C₁-C₆)-alkyl, more preferably (C₁-C₄)-alkyl,
and R⁷ is hydrogen or (C₁-C₁₀)-alkyl, preferably hydrogen or (C₁-C₆)-alkyl, more preferably hydrogen or (C₁-C₄)-alkyl.

2. The process according to claim 1, wherein the reaction takes place at a temperature in the range from 60 to 95°C, preferably at a temperature in the range from 65 to 90°C.

3. The process according to claim 1 or 2, wherein a compound of the formula (IIa) 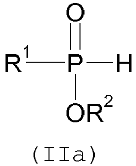 is reacted with the acrolein cyanohydrin of the formula (IIIa) 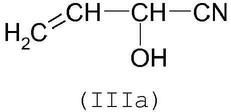 where:
R¹ is (C₁-C₆)-alkyl, (C₁-C₆)-haloalkyl, (C₆-C₈)-aryl, (C₆-C₈)-haloaryl, (C₇-C₁₀)-aralkyl, (C₇-C₁₀)-haloaralkyl, (C₅-C₈)-cycloalkyl or (C₅-C₈)-halocycloalkyl,
R² is (C₁-C₆)-alkyl, (C₁-C₆)-haloalkyl, (C₆-C₈)-aryl, (C₆-C₈)-haloaryl, (C₇-C₁₀)-aralkyl, (C₇-C₁₀)-haloaralkyl, (C₅-C₈)-cycloalkyl or (C₅-C₈)-halocycloalkyl.

4. The process according to any of claims 1 to 3, wherein the reaction takes place in the presence of one or more radical initiators selected from the group consisting of tert-butyl peroxypivalate, tert-amyl peroxypivalate, tert-butyl peroxyneodecanoate, 1,1,3,3-tetramethylbutyl peroxyneodecanoate, tert-butylperoxy-2-ethylhexanoate, 1,1,3,3-tetramethylbutyl peroxy-2-ethylhexanoate, tert-amyl peroxyneodecanoate, cumyl peroxyneodecanoate, cumyl peroxyneoheptanoate, and cumyl peroxypivalate.

5. The process according to any of claims 1 to 4, wherein the molar ratio of the total amount of the phosphorus-containing reactant (II) or (IIa) used to the total amount of the cyanohydrin of the formula (III) or (IIIa) used is in the range from 2:1 to 8:1.

6. The process according to any of claims 1 to 5, wherein the radical initiator or initiators of the formula (IV) or a portion of the radical initiators of the formula (IV) is premixed with a portion or the entirety of compound (II) or (IIa), and this mixture is metered into the reaction vessel simultaneously with the compound of the formula (III) or (IIIa).

7. A mixture selected from the group consisting of
- mixtures comprising one or more compounds of the formula (IV) and a compound of the compound (IIIa) formula,
- mixtures comprising one or more compounds of the formula (IV) and a compound of the compound (IIa) formula,
- mixtures comprising a compound of the formula (IIIa) and a compound of the compound (IIa) formula, where the compounds of the formulae (IIa) and (IIIa) have the structure defined in claim 3 and the compounds of the formula (IV) have the structure defined in claim 1,
where R¹ is methyl and R² is n-butyl.

8. A process for preparing glufosinate and/or glufosinate salts 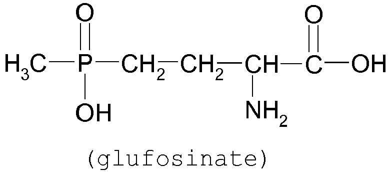 wherein the process comprises the following step:
reaction of a compound of the formula (Ib) to give the corresponding compound of the formula (V), 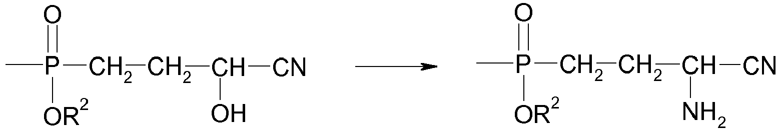 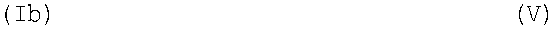 where R² is in each case either n-butyl or n-pentyl, and where compound (Ib) is prepared by a process defined in claims 1 to 6.

9. The process according to claim 8, wherein the preparation of compound (V) takes place by reaction of compound (Ib) with NH₃.

10. The process according to claim 8 or 9, where R² is in each case n-butyl.

11. A compound of the formula (AMN) 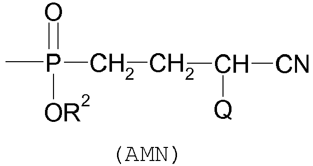 where
Q is either OH or NH₂, and
R² is either n-butyl or n-pentyl, preferably n-butyl.

12. The use of a compound according to claim 11 for preparing glufosinate and/or glufosinate salts, more particularly glufosinate, glufosinate-sodium or glufosinate-ammonium.

## Revendications

1. Procédé de fabrication d'un composé de formule (I) 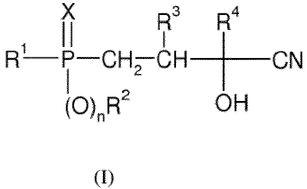 **caractérisé en ce qu'**un composé de formule (II) 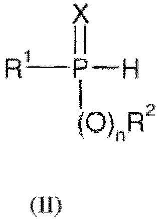 est mis en réaction avec une cyanhydrine de formule (III) 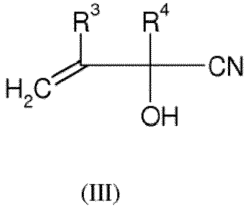 à une température dans la plage allant de 50 à 105 °C, dans lesquelles
R¹ signifie alkyle en (C₁-C₁₂), haloalkyle en (C₁-C₁₂), aryle en (C₆-C₁₀), haloaryle en (C₆-C₁₀), aralkyle en (C₇-C₁₀), haloaralkyle en (C₇-C₁₀), cycloalkyle en (C₄-C₁₀) ou halocycloalkyle en (C₄-C₁₀),
R² signifie alkyle en (C₁-C₁₂), haloalkyle en (C₁-C₁₂), aryle en (C₆-C₁₀), haloaryle en (C₆-C₁₀), aralkyle en (C₇-C₁₀), haloaralkyle en (C₇-C₁₀), cycloalkyle en (C₄-C₁₀) ou halocycloalkyle en (C₄-C₁₀),
R³ et R⁴ signifient chacun indépendamment l'un de l'autre hydrogène, alkyle en (C₁-C₄), phényle ou benzyle,
X signifie oxygène ou soufre,
n signifie 0 ou 1, et
la réaction a lieu en présence d'un ou de plusieurs agents de formation de radicaux de formule (IV) : 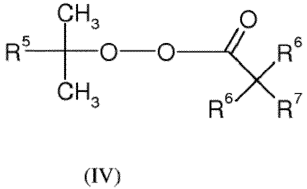 dans laquelle
R⁵ signifie méthyle, éthyle, 2,2-diméthylpropyle ou phényle,
les R⁶ signifient indépendamment l'un de l'autre alkyle en (C₁-C₁₀), de préférence alkyle en (C₁-C₆), de préférence alkyle en (C₁-C₄),
et
R⁷ signifie hydrogène ou alkyle en (C₁-C₁₀), de préférence hydrogène ou alkyle en (C₁-C₆), de préférence hydrogène ou alkyle en (C₁-C₄).

2. Procédé selon la revendication 1, **caractérisé en ce que** la réaction a lieu à une température dans la plage allant de 60 à 95 °C, de préférence à une température dans la plage allant de 65 à 90 °C.

3. Procédé selon la revendication 1 ou 2, **caractérisé en ce qu'**un composé de formule (IIa) 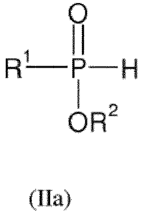 est mis en réaction avec l'acroléine-cyanhydrine de formule (IIIa) : 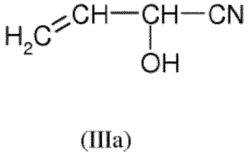 dans laquelle
R¹ signifie alkyle en (C₁-C₆), haloalkyle en (C₁-C₆), aryle en (C₆-C₈), haloaryle en (C₆-C₈), aralkyle en (C₇-C₁₀), haloaralkyle en (C₇-C₁₀), cycloalkyle en (C₅-C₈) ou halocycloalkyle en (C₅-C₈),
R² signifie alkyle en (C₁-C₆), haloalkyle en (C₁-C₆), aryle en (C₆-C₈), haloaryle en (C₆-C₈), aralkyle en (C₇-C₁₀), haloaralkyle en (C₇-C₁₀), cycloalkyle en (C₅-C₈) ou halocycloalkyle en (C₅-C₈).

4. Procédé selon l'une quelconque des revendications 1 à 3, **caractérisé en ce que** la réaction a lieu en présence d'un ou de plusieurs agents de formation de radicaux choisis dans le groupe constitué par le peroxypivalate de tert-butyle, le peroxypivalate de tert-amyle, le peroxynéodécanoate de tert-butyle, le peroxynéodécanoate de 1,1,3,3-tétraméthylbutyle, le peroxy-2-éthylhexanoate de tert-butyle, le peroxy-2-éthylhexanoate de 1,1,3,3-tétraméthylbutyle, le peroxynéodécanoate de tert-amyle, le peroxynéodécanoate de cumyle, le peroxynéoheptanoate de cumyle et le peroxypivalate de cumyle.

5. Procédé selon l'une quelconque des revendications 1 à 4, caractérisé ce que le rapport molaire entre la quantité totale du réactif contenant du phosphore (II) ou (IIa) utilisé et la quantité totale de la cyanhydrine de formule (III) ou (IIIa) utilisée se situe dans la plage allant de 2:1 à 8:1.

6. Procédé selon l'une quelconque des revendications 1 à 5, caractérisé ce que le ou les agents de formation de radicaux de formule (IV) ou une partie des agents de formation de radicaux de formule (IV) sont pré-mélangés avec une partie ou la totalité du composé (II) ou (IIa), et ce mélange est introduit simultanément avec le composé de formule (III) ou (IIIa) dans le récipient de réaction.

7. Mélange, choisi dans le groupe constitué par :
- les mélanges comprenant un ou plusieurs composés de formule (IV) et un composé de formule de composé (IIIa),
- les mélanges comprenant un ou plusieurs composés de formule (IV) et un composé de formule de composé (IIa),
- les mélanges comprenant un composé de formule (IIIa) et un composé de formule de composé (IIa),
les composés de formule (IIa) et (IIIa) présentant la structure définie dans la revendication 3 et les composés de formule (IV) présentant la structure définie dans la revendication 1,
R¹ signifiant méthyle et R² signifiant n-butyle.

8. Procédé de fabrication de glufosinate et/ou de sels de glufosinate 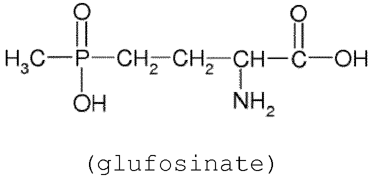 **caractérisé par** l'étape suivante :
la mise en réaction d'un composé de formule (Ib) pour former le composé de formule (V) correspondant : 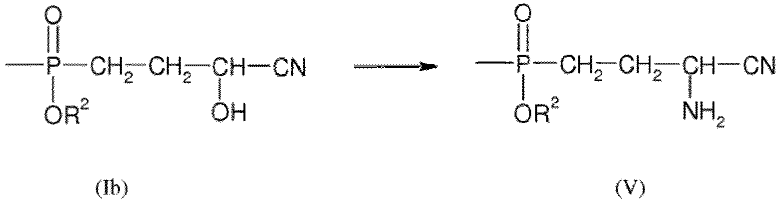 R² signifiant à chaque fois n-butyle ou n-pentyle,
et la fabrication du composé (Ib) ayant lieu par un procédé défini dans les revendications 1 à 6.

9. Procédé selon la revendication 8, **caractérisé en ce que** la fabrication du composé (V) a lieu par mise en réaction du composé (Ib) avec NH₃.

10. Procédé selon la revendication 8 ou 9, dans lequel R² signifie à chaque fois n-butyle.

11. Composé de formule (AMN) 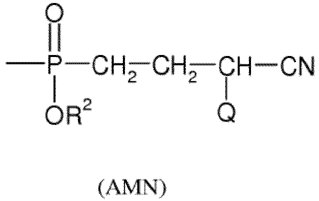 dans laquelle
Q signifie OH ou NH₂,
R² signifie n-butyle ou n-pentyle, de préférence n-butyle.

12. Utilisation d'un composé selon la revendication 11 pour la fabrication de glufosinate ou de sels de glufosinate, notamment de glufosinate, de glufosinate de sodium ou de glufosinate d'ammonium.
